# FASCICULE DE BREVET EUROPEEN

(11) **EP 1 238 828 B1**
(45) Date de publication et mention de la délivrance du brevet: **23.08.2006**
(21) Numéro de dépôt: 02003972.3
(22) Date de dépôt: 22.02.2002
(51) Int. Cl.: B60C 15/00

(54) **Armature de carcasse pour pneumatique d'avion**
Karkassenverankerungsstruktur für Flugzeugreifen
Carcass reinforcement anchoring strucure for airplane tyre

(30) Priorité: 09.03.2001 FR 0103279
(43) Date de publication de la demande: 11.09.2002
(73) Titulaire: Société de Technologie Michelin, 63040 Clermont-Ferrand Cedex 09 (FR); MICHELIN RECHERCHE ET TECHNIQUE S.A., 1763 Granges-Paccot (CH)
(72) Inventeur: Roget, Cyrille, 6300 Clermont-Ferrand (FR); Suarez, Fernando, 63200 Menetrol (FR)
(74) Mandataire: Diernaz, Christian

(56) Documents cités:
- EP-A- 0 700 797
- GB-A- 875 771
- US-A- 4 246 949
- US-A- 4 896 709
- US-A- 5 511 599

## Description

La présente invention concerne un pneumatique à armature de carcasse radiale destiné à porter de lourdes charges et gonflé à des pressions relativement fortes, et en particulier un pneumatique pour avion.

Les armatures de carcasse radiale de tels pneumatiques comportent généralement plusieurs nappes d'éléments de renforcement textiles, qui sont ancrées dans chaque bourrelet à au moins un élément de renforcement annulaire et le plus souvent à une seule tringle. Les éléments de renforcement desdites armatures sont enroulés autour de ladite tringle de l'intérieur à l'extérieur en formant de retournements dont les extrémités respectives sont radialement espacées par rapport à l'axe de rotation du pneumatique. Les conditions sévères sous lesquelles sont utilisés les pneumatiques pour avions sont telles que l'endurance des bourrelets est faible, en particulier au niveau des retournements de l'armature de carcasse.

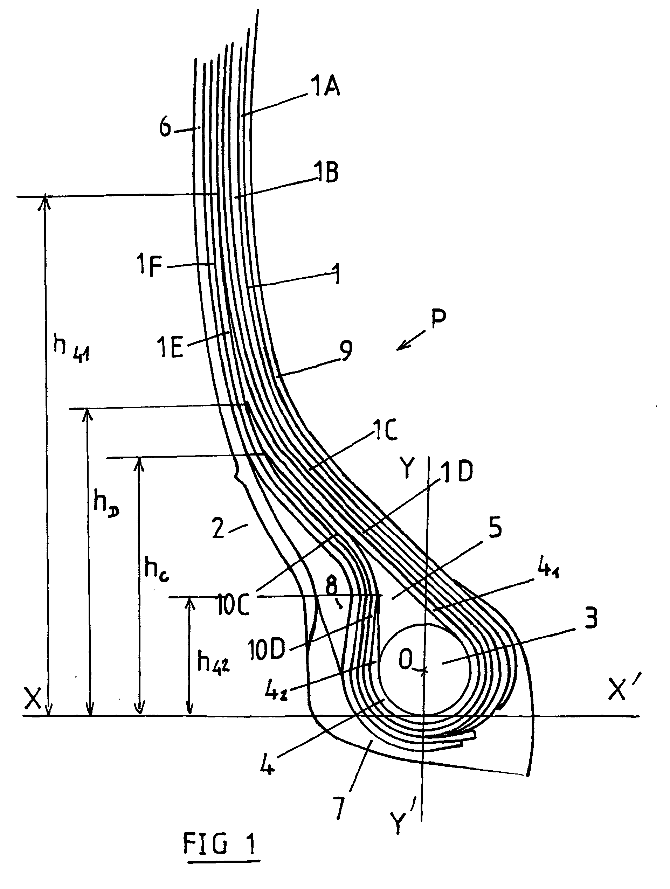

Une amélioration notable des performances est obtenue par la séparation des nappes de l'armature de carcasse en deux groupes. Le premier groupe comprend les nappes de l'armature de carcasse axialement intérieures dans la zone des flancs et bourrelets, lesdites nappes étant alors enroulées autour d'une tringle d'ancrage dans chaque bourrelet en allant de l'intérieur à l'extérieur du pneumatique. Le deuxième groupe est constitué d'au moins une nappe axialement extérieure dans la zone ci-dessus, nappe généralement partiellement enroulée autour de la tringle en allant de l'extérieur à l'intérieur du pneumatique. De telles dispositions sont connues et montrées par exemple dans le brevet US 4 244 414 (figure 2).

Le brevet FR 2 671 517 (US-A-5 379 820) propose une solution complémentaire à la précédente, solution qui consiste à disposer le(les) bord(s) de la (des) dite(s) nappes axialement extérieures entre les retournements des nappes axialement intérieures.

L'endurance des bourrelets de pneumatiques pour avions se doit cependant d'être améliorée, en particulier lorsque lesdits bourrelets subissent de fortes surcharges pouvant conduire à des écrasements de l'ordre de 50% et plus de leur hauteur. Le nombre important de nappes de carcasse, généralement formées d'éléments de renforcement en polyamide aliphatique, nombre nécessaire pour supporter la tension due à la pression dite d'épreuve qui, comme connu, doit être égale à quatre fois la pression de service, entraîne de manière évidente la multiplication du nombre des extrémités libres d'éléments de renforcement, la multiplication des interfaces entre nappes, des pertes hystérétiques plus importantes et donc des températures de fonctionnement plus élevées, autant de facteurs propices à l'accroissement de la fatigue des bourrelets et à leur endurance limitée.

La solution proposée par la présente invention pour améliorer l'endurance des bourrelets d'un pneumatique d'avion réside dans la diminution du nombre de nappes de carcasse retournées autour de la tringle d'ancrage dans chaque bourrelet.

La solution est un pneumatique d'avion selon la revendication 1.

Une nappe est dite non retournée autour d'aucun élément annulaire de renforcement quand la même nappe s'étendant d'un bourrelet à l'autre et n'est pas retournée ni à une de ses extrémités ni à l'autre ; cette disposition essentielle distingue cette invention de l'enseignement du document GB 875 771 dans lequel certaines des nappes de carcasse sont non retournée à une extrémité et retournée à leur autre extrémité.

La disposition ci-dessus permet de plus, tout en ayant le nombre de nappes nécessaire et suffisant pour résister aux tensions dues aux pressions internes de gonflage imposées au pneumatique, une diminution substantielle de nombre de couches renforcées sous la les éléments de renforcement annulaires servant d'ancrage à l'armature de carcasse, ce qui conduit à une diminution du diamètre intérieur desdits éléments et par suite à un meilleur positionnement desdits éléments, avec pour conséquence, une meilleure répartition des pressions de contact entre les sièges et rebords des bourrelets du pneumatique et les sièges et rebords de jante, un serrage sur jante plus uniforme, le résultat final étant une endurance améliorée des bourrelets.

Il a été constaté que pour améliorer la tenue à l'épreuve d'éclatement à l'eau, il était avantageux que les nappes axialement intérieures non retournées soient choisies parmi les nappes axialement les plus à l'intérieur, c'est-à-dire les nappes le plus à l'intérieur du pneumatique.

L'armature de carcasse est avantageusement complétée par des nappes de carcasse axialement extérieures, c'est-à-dire des nappes radialement superposées aux nappes axialement intérieures dans la région de l'armature de sommet du pneumatique, puis s'étendant dans les flancs axialement à l'extérieur des nappes de carcasse intérieures et dans la zone des bourrelets le long des retournements desdites nappes intérieures en leur étant adjacentes. Lesdites nappes extérieures, formées aussi d'éléments de renforcement textiles, sont partiellement enroulées autour de l'élément de renforcement annulaire et ont des extrémités situées au dessous d'une droite XX', parallèle à l'axe de rotation du pneumatique et passant par le point de la section transversale de l'élément de renforcement annulaire radialement le plus à l'intérieur, et axialement au-delà des extrémités des nappes axialement intérieures non retournées. Le nombre desdites nappes extérieures est de préférence égal au nombre de nappes axialement intérieures non retournées.

De telles armatures de carcasse ont été proposées dans d'autres domaines d'application, en particulier dans le domaine des pneus équipant des véhicules de tourisme (EP-A-700 797) et plus particulièrement des pneus pour roulage à plat (US-A-5 511 599).

Les caractéristiques et autres avantages de l'invention seront mieux compris à l'aide de la description d'un exemple non limitatif, à laquelle est annexé un dessin dont la figure unique montre schématiquement, vu en section méridienne, un pneumatique conforme à l'invention.

L'exemple donné est celui d'un pneumatique de dimension normalisée 46 x 17.0 R 20 (normes de la 'Tire and Rim Association'). L'armature de carcasse (1) est formée de six nappes (1A à 1F) de câbles textiles radiaux en polyamide aliphatique (notamment en câbles nylon 188/3 ou 210/3). Il faut entendre par câbles radiaux d'un pneumatique d'avion des câbles faisant avec la direction circonférentielle des angles pouvant être compris dans l'intervalle 90° ± 15°. Parmi lesdites six nappes, quatre nappes (1A à 1D), sont dites axialement intérieures dans les flancs et bourrelets. Deux (1C et 1D) desdites quatre nappes sont enroulées dans chaque bourrelet (2) autour d'un élément de renforcement annulaire ayant la forme d'une tringle (3), ayant dans le cas étudié une section transversale circulaire, en allant de l'intérieur à l'extérieur du pneumatique P, pour former des retournements (10C et 10D).

Les extrémités desdits retournements sont distants de la base du bourrelet, représentée par une ligne XX' parallèle à l'axe de rotation du pneumatique et passant par le point de la section transversale de la tringle (3) radialement le plus à l'intérieur, des hauteurs respectives h_{C} et h_{D}. La hauteur h_{C}, la plus grande, est la hauteur du retournement (10C) de la troisième nappe (1C) axialement intérieure, alors que la hauteur h_{D}, la plus petite, est la hauteur du retournement (10D) de la quatrième nappe (1D) axialement intérieure. Les deux hauteurs h_{C} et h_{D} sont respectivement égales à 26,7% et 22,8% de la hauteur H du pneumatique sur jante (non montrée). Par définition, la hauteur du pneumatique monté et gonflé, est, vue en section méridienne, la distance radiale mesurée entre le point de la bande de roulement le plus éloigné de l'axe de rotation et une parallèle audit axe distante dudit axe d'une quantité égale au rayon nominal normalisé de la jante de service.

Axialement entre les retournements (10C et 10D) et les parties principales de nappes de carcasse intérieures (1C et 1D) sont disposés d'une part radialement au-dessus de la tringle un profilé de caoutchouc de forme sensiblement triangulaire (5) et d'autre part les brins (4₁ et 4₂), respectivement intérieur et extérieur, d'une nappe de renforcement (4) ou languette intérieure, ladite languette (4) entourant le(s) profilé(s) caoutchouteux (5) séparant axialement la partie principale d'armature de carcasse (nappes 1A à 1D) des retournements (10C, 10D). Ladite languette (4) est formée de câbles textiles en polyamide aliphatique, plus particulièrement des câbles 188/3 en nylon, lesdits câbles étant orientés d'un angle par rapport à la direction circonférentielle égal à 88° et ses deux brins ont des hauteurs h₄₁ et h₄₂, mesurées par rapport à la droite XX', respectivement égales à 149 et 41 mm.

Les nappes (1A et 1B) axialement les plus intérieures, continues de bourrelet à bourrelet, ne sont pas retournées autour de la tringle (3), et leurs extrémités, décalées l'une par rapport à l'autre, sont situées radialement au-dessous de la droite XX' et axialement à l'intérieur de la droite YY' perpendiculaire à l'axe de rotation et passant par le centre de gravité O de la section méridienne de la tringle (3).

Les nappes (1E et 1F) d'armature de carcasse axialement extérieures ont leurs bords qui recouvrent axialement à l'extérieur et de manière adjacente les retournements (10C, 10D) des nappes (1C, 1D) d'armature de carcasse (1). Lesdites nappes (1E, 1F) sont enroulées autour de la tringle d'ancrage (3) sur une portion ou arc circulaire correspondant à un angle au centre de cercle circonscrit à la tringle au plus égal à 180°, de sorte que les extrémités desdites nappes (1E et 1F) soient radialement situées au-dessous de la droite XX' parallèle à l'axe de rotation et axialement à l'intérieur de la droite YY'.

Les nappes (1E et 1F) d'armature de carcasse axialement extérieures ont une densité de renforts qui est préférentiellement inférieure (dans le cas présent : 75 renforts par décimètre) à la densité de renforts des nappes (1A à 1D) d'armature de carcasse axialement intérieures (ici 83 renforts par décimètre) afin d'améliorer encore l'endurance en fatigue des nappes subissant des cycles répétés de flexion; les densités de renforts sont mesurée dans la direction circonférentielle axialement au niveau du centre de gravité O de la tringle. Une autre variante préférentielle consiste en ce que les nappes axialement intérieures non retournées aient une densité de renfort inférieure à la densité des renforts des nappes axialement intérieures retournées autour des tringles.

Il est également préférable que le module d'élasticité sous faible déformation des mélanges de caoutchouc des nappes axialement extérieures (1E et 1F) soit inférieur au même module des nappes axialement intérieures (1A à 1D).

L'armature de carcasse radiale (1) est surmontée radialement d'une armature de sommet (non montrée) comprenant d'une part une armature de travail et radialement à l'extérieur une armature de protection. L'armature de travail est, comme connu en soi, obtenue par enroulement, en zigzag sur une forme plus ou moins cylindrique et en allant d'un bord à l'autre de ladite armature, d'une bande de 8 câbles en polyamide aliphatique de même nature et même structure que les câbles utilisés en nappes de carcasse et languettes. L'enroulement se prolonge jusqu'à obtenir le nombre de couches croisées nécessaires. L'armature de sommet de protection se compose d'une nappe, ladite nappe étant formée de câbles métalliques ondulés dans le plan de la nappe et dont la direction moyenne fait avec la direction circonférentielle un angle nul.

Une bande de roulement, des flancs (6), des couches extérieures de protection des bourrelets (7), un profilé de remplissage de bourrelets (8), ainsi qu'une couche caoutchouteuse intérieure (9) complètent, comme connu, la constitution du pneumatique étudié.

Un pneumatique, tel que décrit ci-dessus, a été testé conformément à la spécification AIRBUS de la dimension étudiée et a subi avec succès le test prescrit. Comparativement à un pneumatique de même dimension et comportant une armature de carcasse dans laquelle les quatre nappes axialement intérieures étaient retournées autour de la tringle d'ancrage, une diminution de poids de 3,5% est obtenue, le temps de fabrication a été réduit alors que ladite fabrication est plus aisée, ce qui se ressent sur les prix de revient industriels.

## Revendications

1. Pneumatique d'avion, gonflé à pression élevée, comprenant une bande de roulement réunie à deux bourrelets (2) par l'intermédiaire de deux flancs (6), chaque bourrelet comportant au moins un élément de renforcement annulaire (3), ce pneumatique comprenant une armature de sommet et une armature de carcasse radiale (1) comprenant un nombre de nappes axialement intérieures (1A à 1D) supérieur ou égal à deux, ces nappes de l'armature de carcasse radiale comportant des éléments de renforcement textiles, ce pneumatique ayant parmi les nappes axialement intérieures (1A à 1D) au moins la moitié du nombre total de nappes axialement intérieures (1C, 1D) retournées dans chaque bourrelet autour d'au moins un élément de renforcement annulaire (3), **caractérisé en ce que** au moins une et au plus trois des nappes axialement intérieures (1A, 1B) restantes sont non retournées dans aucun des bourrelets et ont des extrémités situées radialement au-dessous d'une droite (XX') parallèle à l'axe de rotation du pneumatique et passant par le point de la section transversale de l'élément de renforcement annulaire (3) radialement le plus à l'intérieur et axialement à l'intérieur d'une droite (YY'), perpendiculaire à l'axe de rotation et passant par le centre de gravité (O) de la section transversale de l'élément de renforcement annulaire (3).

2. Pneumatique selon la revendication 1, **caractérisé en ce que** les nappes axialement intérieures (1A, 1B) non retournées sont les nappes axialement les plus à l'intérieur du pneumatique.

3. Pneumatique selon la revendication 2, **caractérisé en ce que** l'armature de carcasse (1) est complétée par au moins une nappe axialement extérieure (1E, 1F) formées d'éléments de renforcement textiles, ces nappes, s'étendant dans les flancs (6) axialement à l'extérieur des nappes de carcasse intérieures (1A à 1D) et dans la zone des bourrelets (2) le long des retournements (10C, 10D) des nappes intérieures (1C, 1D) retournées en leur étant adjacentes.

4. Pneumatique selon la revendication 3, **caractérisé en ce que** le nombre des nappes axialement extérieures (1E, 1F) est égal au nombre de nappes axialement intérieures non retournées (1A, 1B).

## Claims

1. Aircraft tyre, inflated to a high pressure, comprising a tread connected to two beads (2) by way of two sidewalls (6), each bead having at least one annular reinforcing element (3), this tyre comprising a crown reinforcement and a radial carcass reinforcement (1) comprising a number of axially inner plies (1A to 1D) greater than or equal to two, these radial carcass reinforcement plies having textile reinforcing elements, this tyre having among the axially inner plies (1A to 1D), at least half the total number of axially inner plies (1C, 1D) turned up in each bead about at least one annular reinforcing element (3), **characterised in that** at least one and at most three of the remaining axially inner plies (1A, 1B) are not turned up in any of the beads and have ends situated radially below a straight line (XX') parallel to the axis of rotation of the tyre and passing through the radially innermost point of the cross-section of the annular reinforcing element (3) and axially inside a straight line (YY'), perpendicular to the axis of rotation and passing through the centre of gravity (O) of the cross-section of the annular reinforcing element (3).

2. Tyre according to Claim 1, **characterised in that** the axially inner plies (1A, 1B) which are not turned up are the axially innermost plies of the tyre.

3. Tyre according to Claim 2, **characterised in that** the carcass reinforcement (1) is completed by at least one axially outer ply (1E, 1F) formed from textile reinforcing elements, these plies extending in the sidewalls (6) axially outside the inner carcass plies (1A to 1D) and in the zone of the beads (2) along the upturns (10C, 10D) of the turned-up inner plies (1C, 1D) while being adjacent to them.

4. Tyre according to Claim 3, **characterised in that** the number of the axially outer plies (I E, 1F) is equal to the number of axially inner plies which are not turned up (1A, 1B).

## Patentansprüche

1. Flugzeugreifen, der auf einen hohen Druck aufgepumpt ist und einen Laufstreifen enthält, der über die beiden Flanken (6) mit den beiden Wülsten (2) verbunden ist, wobei jeder Wulst mindestens ein ringförmiges Verstärkungselement (3) aufweist, wobei der Luftreifen eine Scheitelbewehrung und eine radiale Karkassenbewehrung (1) umfasst, die eine Anzahl von axial inneren Lagen (1A bis 1D) aufweist, die größer oder gleich zwei ist, wobei die Lagen der radialen Karkassenbewehrung textile Verstärkungselemente enthalten und in dem Luftreifen von den axial inneren Lagen (1A bis 1D) mindestens die Hälfte der Gesamtzahl der axial inneren Lagen (1C, 1D) in jedem Wulst um mindestens ein ringförmiges Verstärkungselement (3) hochgeschlagen ist, **dadurch gekennzeichnet, dass** mindestens eine und höchstens drei der verbleibenden axial inneren Lagen (1A, 1B) in keinem der Wülste umgeschlagen sind und Enden besitzen, die sich in radialer Richtung unterhalb einer parallel zur Drehachse des Luftreifens verlaufende Gerade XX' befinden, die durch den Punkt des Querschnitts des ringförmigen Verstärkungselements (3) hindurchgeht, der radial am weitesten innen liegt, und axial innerhalb einer senkrecht zur Drehachse verlaufenden Geraden YY' liegen, die durch den Schwerpunkt (O) des Querschnitts des ringförmigen Verstärkungselements (3) hindurchgeht.

2. Luftreifen nach Anspruch 1, **dadurch gekennzeichnet, dass** die axial inneren Lagen (1A, 1B), die nicht hochgeschlagen sind, die Lagen sind, die in axialer Richtung am Luftreifen am weitesten innen liegen.

3. Luftreifen nach Anspruch 2, **dadurch gekennzeichnet, dass** die Karkassenbewehrung (1) durch mindestens eine axial äußere Lage (1E, 1F) vervollständigt wird, die aus textilen Verstärkungselementen gebildet ist, wobei diese Lagen in den Flanken (6) axial außerhalb der inneren Karkassenlagen (1A bis 1D) und im Bereich der Wülste (2) entlang der Hochschläge (10C, 10D) der inneren Lagen (1C, 1D) verlaufen, die hochgeschlagen sind und an sie angrenzen.

4. Luftreifen nach Anspruch 3, **dadurch gekennzeichnet, dass** die Anzahl der axial äußeren Lagen (1E, 1F) der Anzahl der nicht hochgeschlagenen axial inneren Lagen (1A, 1B) entspricht.
